# EUROPÄISCHE PATENTSCHRIFT

(11) **EP 1 451 019 B1**
(45) Veröffentlichungstag und Bekanntmachung des Hinweises auf die Patenterteilung: **07.03.2012**
(21) Anmeldenummer: 02803384.3
(22) Anmeldetag: 19.11.2002
(51) Int. Cl.: G07D 7/12, B42D 15/00

(54) **GEGENSTAND, INSBESONDERE WERT- UND SICHERHEITSDOKUMENT MIT EINEM SICHERHEITSMERKMAL**
ARTICLE, ESPECIALLY VALUABLE AND SECURITY DOCUMENT, COMPRISING A SECURITY FEATURE
ARTICLE, EN PARTICULIER DOCUMENT DE VALEUR ET DE SECURITE COMPORTANT UNE CARACTERISTIQUE DE SECURITE

(30) Priorität: 20.11.2001 DE 10156852
(43) Veröffentlichungstag der Anmeldung: 01.09.2004
(73) Patentinhaber: Giesecke & Devrient GmbH, 81677 München (DE)
(72) Erfinder: ATTENBERGER, Thomas, 85586 Poing (DE); DECKENBACH, Wolfgang, 83135 Schechen (DE); HOPPE, Rainer, 90425 Nürnberg (DE)
(74) Vertreter: Klunker . Schmitt-Nilson . Hirsch
(86) Internationale Anmeldenummer: PCT/EP2002/012959
(87) Internationale Veröffentlichungsnummer: WO 2003/043830

(56) Entgegenhaltungen:
- DE-A- 19 805 993
- US-A- 5 448 582
- US-A- 5 903 340

## Beschreibung

Die Erfindung betrifft allgemein einen Gegenstand, insbesondere jedoch ein Wert- und Sicherheitsdokument, mit einem Sicherheitsmerkmal. Ohne Beschränkung der Allgemeinheit sollen sich die folgenden Ausführungen auf ein Wert- und Sicherheitsdokument in Form einer Banknote beziehen, wobei dem Fachmann deutlich wird, dass die das Sicherheitsmerkmal betreffenden Angaben auch für andere zu sichernde Gegenstände, beispielsweise hoch-wertige Industrieprodukte, Ersatzteile und ICs, sowie für deren Verpackungen gelten.

Um die Echtheit von Banknoten (und anderen Wert- und Sicherheitsdokumenten sowie von Gegenständen allgemein) zu überprüfen, werden Sicherheitsmerkmale eingearbeitet, die zum einen Teil ohne besondere Hilfsmittel, zum anderen Teil mit Spezialausrüstungen nachweisbar sind, um so echte Banknoten von gefälschten Banknoten zu unterscheiden. Beispiele für solche Sicherheitsmerkmale oder Echtheitsmerkmale sind z.B. Wasserzeichen, Sicherheitsfäden, Hologramme, Kinegramme, fluoreszierende Fasern. Mit vorliegender Erfindung soll ein weiteres Sicherheitsmerkmal für Gegenstände allgemein und insbesondere für Wert- und Sicherheitsdokumente geschaffen werden, welches allein oder in Verbindung mit anderen Sicherheitsmerkmalen verwendet werden kann.

Zu diesem Zweck schafft die vorliegende Erfindung einen Gegenstand, insbesondere ein Wert- und Sicherheitsdokument, mit einem Sicherheitsmerkmal, wobei das Sicherheitsmerkmal folgende Merkmale aufweist:
a) eine Emitterschicht für stimulierte optische Emission;
b) eine räumliche periodische Modulation, insbesondere Höhenmodulation; und
c) optional mindestens eine an die Emitterschicht angrenzende Grenzschicht.

Demnach schafft die vorliegende Erfindung einen Gegenstand mit einem Sicherheitsmerkmal in Form eines "Folienlasers".

Speziell geht es um die Nutzung eines DFB-Folien-Lasers (DFB = distributed feed back) als Sicherheitsmerkmal. Ein besonderes, wenngleich an sich bekanntes Merkmal dieses Sicherheitsmerkmals besteht in der periodischen Modulation dieses Laserelements, die sich in eine Richtung oder auch in zwei Richtungen erstrecken kann.

Folienlaser sind in verschiedenen Varianten und für verschiedene Zwecke bereits bekannt, allerdings gibt es bislang keinen Vorschlag, derartige Folienlaser als Sicherheitsmerkmale einzusetzen. Ein wichtiges Merkmal ist die bereits erwähnte periodische Modulation, die z.B. durch Modulation der Emitterschicht oder der Grenzschicht erreicht werden kann. In einer bevorzugten Ausführungvariante bildet die Grenzschicht ein Substrat auf dessen Oberfläche die Emitterschicht aufgebracht wird. In besonders einfacher Weise wird die Modulation z.B. in Form einer Höhenmodulation durch Prägen beispielsweise eines PET-Substrats ausgebildet. Die Periodenlänge der vorgegebenen Modulation ermöglicht das gezielte und feine Einstellen der Frequenz des anschwingenden Lasers.

Die DE 198 05 993 A1 zeigt einen Folienlaser mit einem Aufbau, von dem auch die vorliegende Erfindung im Wesentlichen Gebrauch macht. Spezielle Anwendungen für einen solchen Folienlaser sind in der genannten Schrift jedoch nicht angegeben.

Bei einem solchen Folienlaser wird durch optisches Pumpen das Material der Emitterschicht angeregt; wird die Laserschwelle erreicht und überschritten, so entsteht Laserstrahlung mit einer Wellenlänge, die von der Modulationsperiode der Modulation abhängt, wobei durch geeignete Wahl der Modulationsperiode eine feine Einstellung der jeweils gewünschten Laserwellenlänge möglich ist.

Es gibt weitere Veröffentlichungen zum Thema "Laserfolie oder Plastiklaser", so z.B. in LaserOpto 313/1999 S. 21/22; Spektrum der Wissenschaft 10/1999 S. 12ff. Als mögliche Anwendungen für Plastikfolienlaser kommen nach diesen Veröffentlichungen z.B. leuchtkräftige Flachbildschirme und künstlerische Anwendungen infrage.

Aus der DE 198 36 813 A1 ist ein Wert- und Sicherheitsdokument mit optisch anregbarem Farbstoff zur Echtheitsprüfung bekannt, wobei in einem Trägermaterial Farbstoffe eingebettet sind, die zusammen mit dem Trägermaterial ein laseraktives Element bilden. Durch diese Maßnahme lässt sich zwar ein Sicherheitsmerkmal bilden, allerdings fehlt diesem Sicherheitsmerkmal die erfindungsgemäße Besonderheit einer periodischen Modulation, mithin die Möglichkeit, die Wellenlänge eines oder mehrerer Abschnitte des Sicherheitsmerkmals auf einen Sollwert einzustellen und dadurch eine Codierung zu ermöglichen, welche die Lage und/oder die Wellenlänge eines Sicherheitsmerkmal-Abschnitts beinhaltet.

Aus den US-Patenten 5,448,582 und 5,625,456 sind Farbstofflaser und einige Anwendungen für derartige Laser bekannt. Dabei beruht der Lasereffekt auf Streueffekten, eine gerichtete Laseremission ist damit nicht möglich. Mögliche Anwendungen sind das Ausstatten von Gegenständen mit einem solchen laseraktiven Material und das Erkennen des Vorhandenseins eines solchen Materials durch Bestrahlung mit einer geeigneten Anregungs-Wellenlänge.

Aus dem US-Patent 5 903 340 ist ferner ein optisches Verstärkermedium bekannt, das bei Anregung mit geeigneter Anregungsenergie Iaserartige Aktivität zeigen und zur Authentifizierung von Dokumenten eingesetzt werden kann. Dabei wird auch hier die Tatsache ausgenutzt, dass eine Farbe oder ein anderes Licht emittierendes Material in Kombination mit streuenden Teilchen elektrooptische Eigenschaften aufweist, die mit denen von Lasern übereinstimmen.

Wie bereits erwähnt, lässt sich bei dem erfindungsgemäßen Sicherheitsmerkmal durch entsprechende Einstellung der Modulation eine Codierung erreichen. Die Modulation kann z.B. durch periodische Modulation des Brechungsindexes erfolgen. Dies wird beispielsweise durch eine Höhenvariation der Emitterschicht oder einer Grenzschicht realisiert. Außerdem kann die räumliche Modulation auch durch eine periodische Variation der Dicke der Emitterschicht hervorgerufen werden. Wegen ihrer besonders einfachen Herstellbarkeit bevorzugt wird jedoch eine Höherunodulation der Oberfläche des Substrats, an die die Emitterschicht anschließt, wobei zwischen Substrat und Emitterschicht auch eine Aluminiumschicht als Reflexionsschicht oder Verspiegelung vorgesehen sein kann, um den Lasereffekt zu verstärken.

Durch zweidimenionales Anlegen der periodischen Modulation lässt sich die gewünschte Laserwellenlänge im gesamten Bereich des Sicherheitsmerkmals redundant auslegen, möglich ist aber auch eine in zwei Richtungen verschiedene Abfolge der Modulationsperiode oder mehrerer Modulationsperioden. Durch zweidimensionale Modulation lässt sich die Emissionscharakteristik gezielter einstellen. Im Gegensatz zu bekannten Wert- und Sicherheitsdokumenten mit Lasereffekt als Sicherheitsmerkmal ermöglicht erst die erfindungsgermäße Nutzung der Modulation eine Codierung, die das Sicherheitsmerkmal besonders wertvoll macht.

Wie an sich bekannt, kann auf der Emissionsschicht des Sicherheitsmerkmals eine Schutzschicht mit gegenüber der Emissionsschicht niedrigerem Brechungsindex angeordnet sein. Hierdurch lässt sich Totalreflexion in der Emitterschicht auch bei Verunreinigungen der Oberfläche des Sicherheitsmerkmals garantieren.

Zur Verbesserung der Lebensdauer des Sicherheitsmerkmals sieht die Erfindung vor, dass mindestens eine Schicht des Sicherheitsmerkmals mit optischen Absorbern und/oder Antioxidantien und/oder Radikalfängern ausgestattet ist. Durch optische Absorber lässt sich die Schichtstabilität der laseraktiven Emitterschicht steigern. Durch die genannten zusätzlichen Stoffe in einer oder mehrerer Schichten lässt sich auch die Stabilität der Fluoreszenzeigenschaften erhöhen.

Wie oben bereits erwähnt, gestattet die periodische Modulation eine gleichzeitig einfache, z.B. durch Prägen erzielte Höhenmodulation, und vielseitige Codierung des Sicherheitsmerkmals. Die Codierung kann insbesondere erfindungsgemäß dadurch gebildet sein, dass
a) definierten Stellen der Zustand "laseraktiv" oder "nicht laseraktiv" zugeordnet ist;
b) definierten Stellen der Zustand "nicht laseraktiv" oder "laseraktiv mit einer aus einer vorbestimmten Anzahl von Wellenlängen" zugeordnet ist; und/oder
c) definierten Stellen jeweils eine eigene Wellenlänge aus einer Anzahl möglicher Wellenlängen des Laserlichts oder der Zustand "nicht laseraktiv" zugeordnet ist.

Die einfachste Art der Codierung gemäß dem obigen Merkmal a) ermöglicht z.B. das Codieren von Zuständen wie "0" und "1", also eine bitweise Codierung des Sicherheitsmerkmals. Die zweite Art der Codierung gemäß Merkmal b) ermöglicht eine in hohem Maße vielfältige Codierung. Beispielsweise können in einem matrixförmigen Feld die Kreuzungspunkte der Matrix mit laseraktiven Elementen unterschiedlicher Wellenlängen, auch mit nicht laseraktiven Bereichen ausgestattet sein. Bei drei möglichen laseraktiven Zuständen und einem nicht laseraktiven Zustand und beispielsweise 16 Matrix-Kreuzungsstellen sind dann 4**16 (=416) unterschiedliche Codierungen möglich.

Bei der dritten Codierungsmöglichkeit c) kann ein Feld von laseraktiven und nicht laseraktiven Stellen so codiert sein, dass jeder Stelle eine bestimmte Laserwellenlänge zugeordnet ist, wobei die einzelnen Stellen entweder aktiv oder nicht aktiv sind.

Die Stellen des Sicherheitsmerkmals für die Codierung können entlang einer Linie angeordnet sein, sie können auch zweidimensional verteilt sein. Zum Vermeiden von gegenseitigen Störungen können zwischen den Stellen, d.h. den aktiven Bereichen Trennelemente z.B. in Form von Stegen angeordnet sein, welche nicht laseraktiv sind.

Wie bereits gesagt, kann das erfindungsgemäße Sicherheitselement sehr einfach realisiert werden, beispielsweise kann es als Unterstruktur eines anderen Sicherheitsmerkmals ausgebildet sein, z.B. eines Prägehologramms. Die Erstellung des Sicherheitsmerkmals erfolgt dann im Zuge der üblichen Fertigung, wobei die Ausbildung des Hologramms die Ausbildung der periodischen Modulation beinhaltet.

In einer speziellen Ausgestaltung der Erfindung ist vorgesehen, dass das Sicherheitsmerkmal in Form eines oder mehrerer vorgefertigter Abschnitte, insbesondere in Form von Planchetten, in den Gegenstand eingebracht ist. Solche Planchetten haben beispielsweise Durchmesser von ca. 0,5 bis 5 mm und werden bevorzugt in Papier ein- bzw. auf dessen Oberfläche aufgebracht. Alternative Möglichkeiten zur Einbringung oder Anbringung des Sicherheitsmerkmals in einen bzw. an einen Gegenstand beinhalten das Einbringen oder Aufdrucken kleiner Abschnitte von Folien als Pigmente in Siebdruckfarben. Man kann auch Folienlaser eigenständig herstellen und auf die auszustattenden Gegenstände aufkleben.

Mit dem erfindungsgemäßen Sicherheitsmerkmal ausgestattete Gegenstände lassen sich auf Echtheit dadurch überprüfen, dass der Gegenstand mit dem Sicherheitsmerkmal in die Nähe einer Pumplichtquelle gebracht wird. Dabei kann es sich insbesondere um eine Pulslaserquelle handeln, die genügend Energie in das Sicherheitsmerkmal einbringt, damit der Laserbetrieb anschwingt.

Möglich ist aber auch das Anregen des Sicherheitsmerkmals durch elektrischen Strom. Hierzu wird die Emitterschicht mit elektrisch leitfähigen Schichten ausgestattet, an die eine Spannung angelegt wird. Insbesondere können als solche Elektrodenschichten die durch eine Aluminiumbeschichtung gebildete Verspiegelung auf der substratseitigen Seite der Emitterschicht und eine transparente ITO-Schicht auf der anderen Seite der Emitterschicht sein (ITO: Indium-Tin-Oxide).

Im Folgenden werden Ausführungsbeispiele der Erfindung anhand der Zeichnung näher erläutert. Es zeigen:
- Figur 1: Eine Querschnittsansicht durch eine Banknote mit darin eingearbeitetem Sicherheitsmerkmal gemäß der Erfindung;
- Figuren 2, 3, 4 und 5: jeweils eine alternative Möglichkeit für die Ausbildung der in Figur 1 dargestellten Schichten innerhalb des Ausschnitts "X";
- Figur 6: ein Spektrum eines erfindungsgemäßen Sicherheitsmerkmals mit bei verschiedenen Wellenlängen vorhandenen Peaks innerhalb einer Verstärkungskurve des erfindungsgemäßen Sicherheitsmerkmals;
- Figur 7: eine schematische Draufsicht auf eine Banknote mit einem matrixförmigen Sicherheitsmerkmal, welches zweidimensional codiert ist;
- Figur 8a: eine weitere Ausführungsform eines Sicherheitsmerkmals in Form einer Matrix mit Feldern, die jeweils Laserlicht mit einer dem Feld innerhalb der Matrix zugeordneten Wellenlänge emittieren können; und
- Figur 8b: ein zu dem Sicherheitsmerkmal nach Figur 8a gehöriges Spektrum.

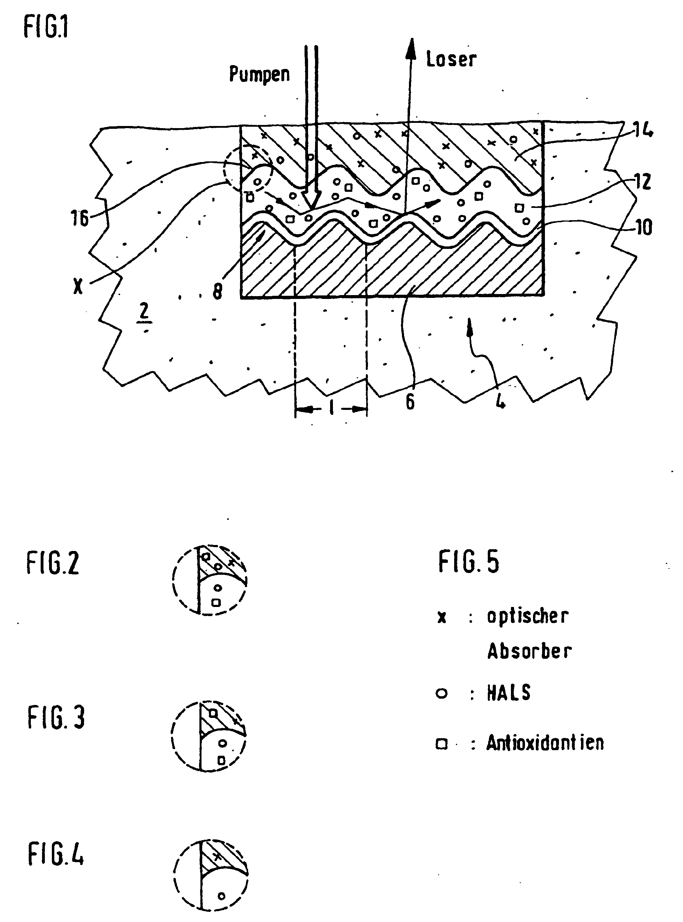

Wie in Figur 1 dargestellt ist, ist in ein hier als Banknote 2 vorliegendes Wert- und Sicherheitsdokument ein Sicherheitsmerkmal 4 eingearbeitet. Der grundsätzliche Aufbau dieses Sicherheitsmerkmals 4 in Form eines DFB-Folien-Lasers (DFB = distributed feed back) ist bekannt, wozu beispielsweise verwiesen wird auf die oben bereits erwähnte DE 198 05 993 A1.

Das Sicherheitsmerkmal 4 enthält ein PET-Substrat 6 (PET: Polyäthylenterephthalat), auf dessen Oberseite eine Höhenmodulation 8 mit einer Periodenlänge 1 ausgebildet ist. Die Höhenmodulation ist durch Prägen des PET-Substrats gebildet, wie dies z.B. in der oben erwähnten DE 198 05 993 A1 im Einzelnen beschrieben ist.

Bei der vorliegenden Ausführungsform ist die Höhenmodulation in nur einer Richtung, d.h., in Figur 1 von links nach rechts ausgebildet. Hierbei wird unterstellt, dass sich die Berge und Täler der im Querschnitt etwa sinusförmigen Struktur mit gleichem Querschnitt in die Zeichenebene hinein und aus ihr heraus erstrecken. Möglich ist aber auch als alternative Ausführungsform eine periodische Höhenstruktur in noch einer zweiten Richtung, insbesondere in einer zu der ersten Richtung senkrechten Richtung, also eine Höhenmodulation senkrecht zur Zeichnungsebene.

Auf der Oberfläche des mit der Höhenmodulation 8 ausgestatteten Substrats 6 befindet sich als Reflexionsschicht oder Verspiegelung eine Aluminiumschicht 10, die z.B. auf das Substrat 6 aufgedampft ist.

Über der Aluminiumschicht 10 befindet sich eine Emitterschicht 12. Diese Emitterschicht ist so ausgebildet, dass eine stimulierte optische Emission von Laserlicht möglich ist bei entsprechender Anregung durch optische oder elektrische Energie. Als Material für die Emitterschicht kommen z.B. fluoreszierende Polymere, eine Polymerschicht mit eingelagerten Laserfarbstoffen oder anorganischen laserfähigen Pigmenten in Betracht. Die Oberseite der Emitterschicht 12 hat ebenfalls eine Höhenmodulation, deren Modulationsperiode ebenfalls 1 beträgt, identisch mit der Modulationsperiode 1 der Substratoberfläche. An die Höhenmodulation 16 der Emitterschicht 12 schließt nach oben eine Schutzschicht 14 an, bestehend aus einem Material, dessen Brechungsindex geringer ist als derjenige der Emitterschicht 12. Hierdurch wird Totalreflexion innerhalb der Emitterschicht auch bei Verunreinigungen der Folie gewährleistet.

Die Emitterschicht 12 und die Schutzschicht 14 sind mit mehreren Materialien versehen, die die Eigenschaften für den Zweck eines Sicherheitsmerkmals verbessern. In den Figuren 2 bis 4 sind die möglichen Alternativen für solche in den Schichten befindlichen Stoffe dargestellt. In Figur 5 ist die Bedeutung der in den Figuren 1 bis 4 verwendeten Symbole angegeben. Beispielsweise sind nach Figur 2 in der Emitterschicht 12 Radikalfänger (z.B. HALS-Systeme; HALS: Hindered Amine Light Stabilizer) vorgesehen, außerdem Antioxidantien. In der Schutzschicht 14 sind außer den Radikalfängern und den Antioxidantien noch optische Absorber vorhanden.

Die Figuren 3 und 4 zeigen alternative Materialien für den Einbau in die Schichten 12 und 14.

Eine Besonderheit des erfindungsgemäßen Sicherheitsmerkmals ist die periodische Modulation der laseraktiven Emitterschicht 12. Die Modulationsperiode 1 der Höhenmodulation 8 hat Einfluss auf die Wellenlänge des von der Emitterschicht 12 beim Anschwingen des Lasers emittierten Laserlichts. Nach Figur 1 erfolgt die Anregung durch Bestrahlung mit einer Pumpenlichtquelle, beispielsweise mit einem gepulsten Laser. Folge des optischen Pumpens ist das Anschwingen der laseraktiven Emitterschicht 12. Das Laserlicht tritt zum überwiegenden Anteil senkrecht zur Oberfläche und zur Modulationsrichtung des Sicherheitsmerkmals aus.

Man kann nun die Höhenmodulation 8 variieren, indem man die Modulationsperiode 1 kontinuierlich und/oder in diskreten Stufen variiert bzw. abschnittsweise fortlässt. In den Bereichen ohne Höhenmodulation erfolgt keine Laseremission. In den übrigen Bereichen, hier mit "laseraktiv" bezeichnet, erfolgt eine Emission von Laserlicht mit einer Wellenlänge, die in Grenzen durch Einstellen der Modulationsperiode 1 ausgewählt werden kann.

Bei Anregung der Folie (in Figur 1 bestehend aus dem Substrat 6 und den darüber liegenden Schichten) mit Laserlicht kommt es unterhalb der Laserschwelle lediglich zu einer spontanen Emission des in der Emitterschicht enthaltenen Laserfarbstoffs. Bei Energie oberhalb der Laserschwelle bildet sich eine Emissionslinie aus, die typischerweise eine Breite von weniger als 1 nm hat. Nach Figur 1 tritt der Laserstrahl senkrecht zur Oberfläche der Folie aus.

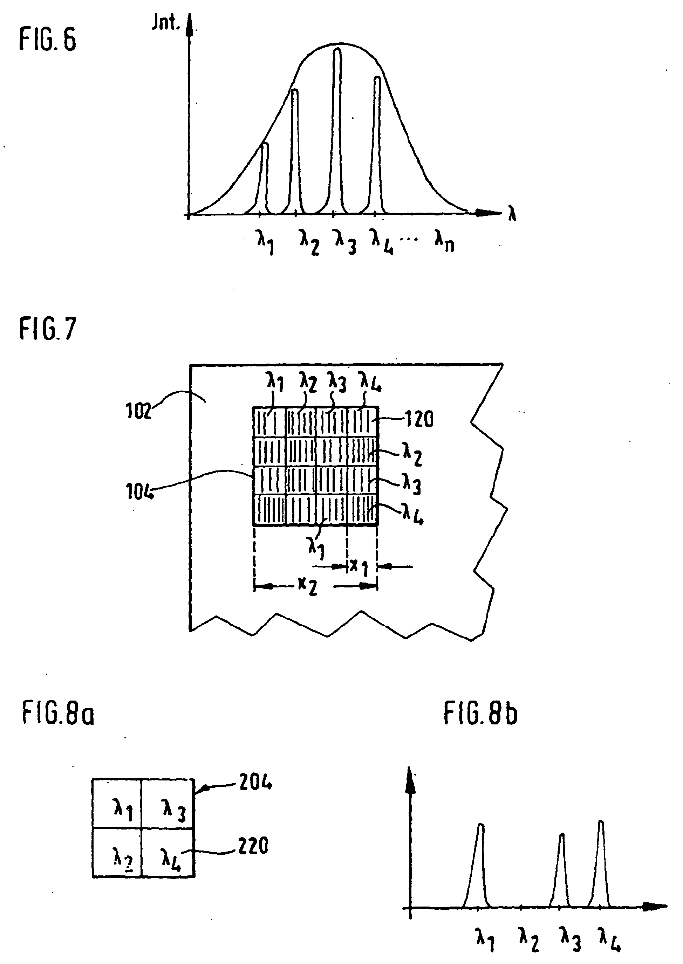

Nach Figur 6 befinden sich innerhalb des durch die "Hüllkurve" dargestellten Verstärkungsbereichs mehrere mögliche Laserwellenlängen, die durch entsprechende Wahl der Modulationsperiode 1 eingestellt werden können. Anhand der unterschiedlichen Wellenlängen des Laserlichts lassen sich verschiedene Folienlaser oder Folienlaser-Abschnitte voneinander unterscheiden. Wie gesagt, sind auch Bereiche ohne jegliche Modulation möglich, die dann "nicht laseraktiv" sind. Eine mögliche Anzahl für unterschiedliche diskrete Wellenlängen innerhalb des Verstärkungsbereichs des Lasers ist N=20.

Figur 7 zeigt eine mögliche Art einer zweidimensional codierten Laserfolie 104 auf einer Banknote 102. Die Laserfolie 104 wird gebildet durch ein quadratisches Folienelement mit der Kantenlänge X₂, umfassend 16 quadratische Teilelemente mit der Kantenlänge X₁. Den verschiedenen 16 Elementen oder Abschnitten der Laserfolie 104 ist jeweils eine von drei verschiedenen Wellenlängen λ₁, λ₂ und λ₃ zugeordnet. Damit ergeben sich für das in Figur 7 dargestellte Sicherheitselement in Form der Laserfolie 3**16 (= 316) unterschiedliche Codierungsmöglichkeiten. Nimmt man noch die Möglichkeit "nicht laseraktiv" für jeden der 16 Abschnitte hinzu, so ergeben sich 4**16 (= 416) Codierungsmöglichkeiten.

Die in Figur 7 dargestellte Laserfolie 104 wird z.B. mit einem Anregungslaser abgetastet, um die Wellenlängen bzw. den Zustand der einzelnen Abschnitte zu "lesen". Hierzu wird ein dünner Laserstrahl reihenweise über die vier Spalten der Matrixanordnung geführt. Alternativ kann auch mit einem linienförmigen Laserstrahl eine reihen- oder spaltenweise Abtastung jeweils von vier Abschnitten gleichzeitig erfolgen, wobei dann die Signalauswertung mit Hilfe eines Mehrkanal-Spektrometers erfolgt.

Man erkennt, dass statt der mehrdimensionalen Matrixform auch eine Linienform mit den Zuständen "laseraktiv" für eine von mehreren möglichen Laserwellenlängen bzw. "nicht laseraktiv" gewählt werden kann.

Figur 8a zeigt eine Ausführungsform eines Folienlasers 204 mit vier Feldern 220, denen jeweils eine bestimmte Wellenlänge λ₁, λ₂, λ₃ und λ₄ zugeordnet ist. Beim Ausführungsbeispiel nach Figur 8a sind die Felder für die Wellenlängen λ₁, λ₃ und λ₄ "laseraktiv", das Feld für die Laserwellenlänge λ₂ "nicht laseraktiv". Beim Auswerten des durch Anregungslicht zur Laseremission angeregten Folienlasers ergibt sich ein Intensitätsspektrum entsprechend Figur 8b.

In den Figuren 7 und 8a nicht dargestellt ist die Besonderheit, zwischen den einzelnen Abschnitten der Matrixanordnung Trennbereiche vorzusehen, die eine gegenseitige Beeinflussung der Laserwellenlängen beim Lesen der Codierung verhindern.

In einer weiteren Ausführungsform kann gemäß Figur 1 anstelle des Pumplichts zum Anregen der Emitterschicht 12 auch elektrische Energie verwendet werden. Beispielsweise kann die Aluminiumschicht 10, die als Verspiegelung fungiert, gleichzeitig als Elektrode ausgebildet sein, an die ein Pol einer Spannungsquelle angeschlossen wird. Im Bereich der Höhenmodulation 16 zwischen den Schichten 12 und 14 kann eine transparente ITO-Schicht vorgesehen werden, die an den anderen Pol der Spannungsquelle angeschlossen wird, falls der Laser anschwingen soll. Man kann auch zwei Metallelektroden mit Loch- oder Rasterstruktur verwenden, die für das austretende Laserlicht durchlässig sind.

Alternativen zu den oben beschriebenen Ausführungsformen wurden bereits angesprochen ist es z.B. möglich, anstelle der Höhenmodulation des Substrats eine Modulation des Brechungsindex der Emitterschicht vorzusehen. Wichtig ist die Modulation zur Erzielung einer bestimmten Laserwellenlänge oder mehrerer bestimmter Laserwellenlängen, um eine Codierung zu ermöglichen.

## Patentansprüche

1. Gegenstand, insbesondere Wert- und Sicherheitsdokument, mit einem Sicherheitsmerkmal (4,104, 204), **dadurch gekennzeichnet, dass** das Sicherheitsmerkmal eine Emitterschicht (12) für stimulierte optische Emission und eine räumliche periodische Modulation aufweist

2. Gegenstand nach Anspruch 1, **dadurch gekennzeichnet, dass** die periodische Modulation sich in eine einzige Richtung erstreckt.

3. Gegenstand nach Anspruch 1, **dadurch gekennzeichnet, dass** die periodische Modulation sich in zwei verschiedene, insbesondere rechtwinklig aufeinander stehende Richtungen erstreckt.

4. Gegenstand nach einem der Ansprüche 1 bis 3, **dadurch gekennzeichnet, dass** die Modulation durch eine Höhenmodulation gebildet wird.

5. Gegenstand nach einem der Ansprüche 1 bis 4, **dadurch gekennzeichnet, dass** das Sicherheitselement ein Substrat (6) aufweist und die Modulation auf der Substratoberfläche ausgebildet ist.

6. Gegenstand nach Anspruch 5, **dadurch gekennzeichnet, dass** sich zwischen dem Substrat (6) und der Emitterschicht (12) eine Reflexionsschicht (10) befindet.

7. Gegenstand nach einem der Ansprüche 1 bis 6, **dadurch gekennzeichnet, dass** auf der Emitterschicht (12) eine Schutzschicht (14) mit gegenüber der Emitterschicht niedrigerem Brechungsindex angeordnet ist.

8. Gegenstand nach einem der Ansprüche 1 bis 7, **dadurch gekennzeichnet, dass** mindestens eine Schicht mit optischen Absorbern und/ oder AntiOxidantien und/oder Radikalfängern ausgestattet ist.

9. Gegenstand nach einem der Ansprüche 1 bis 8, **dadurch gekennzeichnet, dass** das Sicherheitsmerkmal eine Codierung beinhaltet, wobei die Codierung dadurch gebildet ist, dass
a) definierten Stellen der Zustand "laseraktiv" oder "nicht laseraktiv" zugeordnet ist;
b) definierten Stellen der Zustand "nicht laseraktiv" oder "laseraktiv" mit einer aus einer vorbestimmten Anzahl von Wellenlängen zugeordnet ist; und/oder
c) definierten Stellen jeweils eine eigene Wellenlänge aus einer Anzahl möglicher Wellenlängen des Laserlichts oder der Zustand "nicht laseraktiv" zugeordnet ist.

10. Gegenstand nach Anspruch 9, **dadurch gekennzeichnet, dass** die Stellen entlang einer Linie angeordnet sind.

11. Gegenstand nach Anspruch 10, **dadurch gekennzeichnet, dass** die Stellen zweidimensional verteilt angeordnet sind.

12. Gegenstand nach einem der Ansprüche 9 bis 11, **dadurch gekennzeichnet, dass** zwischen den Stellen Trennelemente ausbebildet sind.

13. Gegenstand nach einem der Ansprüche 1 bis 12, **dadurch gekennzeichnet, dass** das Sicherheitsmerkmal als Unterstruktur eines anderen Sicherheitsmerkmals, beispielsweise eines Hologramms, ausgebildet ist.

14. Gegenstand nach einem der Ansprüche 1 bis 12, **dadurch gekennzeichnet, dass** das Sicherheitsmerkmal in Form eines oder mehrerer vorgefertigter Abschnitte, insbesondere in Form von Planchetten, in den Gegenstand eingebracht ist.

15. Gegenstand nach einem der Ansprüche 1 bis 12, **dadurch gekennzeichnet, dass** das Sicherheitsmerkmal mittels Siebdruck an dem Gegenstand angebracht ist oder als vorbereitetes Element auf den Gegenstand aufgeklebt ist.

## Claims

1. An object, in particular a value and security document, having a security feature (4, 104, 204), **characterized in that** the security feature has an emitter layer (12) for stimulated optical emission and a spatial periodic modulation.

2. The object according to claim 1, **characterized in that** the periodic modulation extends in a single direction.

3. The object according to claim 1, **characterized in that** the periodic modulation extends in two different directions, in particular at right angles to each other.

4. The object according to any of claims 1 to 3, **characterized in that** the modulation is formed by a height modulation.

5. The object according to any of claims 1 to 4, **characterized in that** the security element has a substrate (6) and the modulation is formed on the substrate surface.

6. The object according to claim 5, **characterized in that** a reflecting layer (10) is located between the substrate (6) and the emitter layer (12).

7. The object according to any of claims 1 to 6, **characterized in that** there is arranged on the emitter layer (12) a protective layer (14) with a lower refractive index compared with the emitter layer.

8. The object according to any of claims 1 to 7, **characterized in that** at least one layer is equipped with optical absorbers and/or antioxidants and/or radical traps.

9. The object according to any of claims 1 to 8, **characterized in that** the security feature comprises a coding, whereby the coding is formed by
a) defined sites being assigned the state "laser active" or "laser inactive";
b) defined sites being assigned the state "laser inactive" or "laser active" with one of a predetermined number of wavelengths; and/or
c) defined sites being respectively assigned their own wavelength from a number of possible wavelengths of the laser light or the state "laser inactive."

10. The object according to claim 9, **characterized in that** the sites are arranged along a line.

11. The object according to claim 10, **characterized in that** the sites are arranged in two-dimensional distribution.

12. The object according to any of claims 9 to 11, **characterized in that** separating elements are formed between the sites.

13. The object according to any of claims 1 to 12, **characterized in that** the security feature is configured as the substructure of another security feature, for example a hologram.

14. The object according to any of claims 1 to 12, **characterized in that** the security feature is incorporated into the object in the form of one or several prefabricated portions, in particular in the form of planchets.

15. The object according to any of claims 1 to 12, **characterized in that** the security feature is provided on the object by means of screen printing or bonded to the object as a prepared element.

## Revendications

1. Objet, notamment document de valeur et de sécurité, comprenant une caractéristique de sécurité (4, 104, 204), **caractérisé en ce que** la caractéristique de sécurité comporte une couche émettrice (12) pour émission optique stimulée et une modulation périodique spatiale.

2. Objet selon la revendication 1, **caractérisé en ce que** la modulation périodique s'étend dans une unique direction.

3. Objet selon la revendication 1, **caractérisé en ce que** la modulation périodique s'étend dans deux directions différentes notamment perpendiculaires l'une par rapport à l'autre.

4. Objet selon une des revendications de 1 à 3, **caractérisé en ce que** la modulation est constituée par une modulation en hauteur.

5. Objet selon une des revendications de 1 à 4, **caractérisé en ce que** l'élément de sécurité comporte un substrat (6) et **en ce que** la modulation est réalisée sur la surface du substrat.

6. Objet selon la revendication 5, **caractérisé en ce qu'**une couche réfléchissante (10) se trouve entre le substrat (6) et la couche émettrice (12).

7. Objet selon une des revendications de 1 à 6, **caractérisé en ce qu'**une couche de protection (14) possédant une indice de réfraction inférieur à celui de la couche émettrice est agencée sur la couche émettrice (12).

8. Objet selon une des revendications de 1 à 7, **caractérisé en ce qu'**au moins une couche est pourvue d'absorbeurs optiques et/ou d'antioxydants et/ou de capteurs de radicaux.

9. Objet selon une des revendications de 1 à 8, **caractérisé en ce que** la caractéristique de sécurité comporte un codage, le codage étant constitué **en ce que**
a) l'état « à action laser » ou « sans action laser» est affecté à des emplacements définis ;
b) l'état « sans action laser » ou « à action laser » est affecté à des emplacements définis avec une longueur d'ondes appartenant à un nombre prédéterminé de longueurs d'ondes; et/ou ;
c) respectivement une propre longueur d'ondes appartenant à un nombre de longueurs d'ondes possibles de la lumière laser ou l'état « sans action laser» est affecté(e) à des emplacements définis.

10. Objet selon la revendication 9, **caractérisé en ce que** les emplacements sont disposés le long d'une ligne.

11. Objet selon la revendication 10, **caractérisé en ce que** les emplacements sont disposés de manière répartie sur deux dimensions.

12. Objet selon une des revendications de 9 à 11, **caractérisé en ce que** des éléments de séparation sont réalisés entre les emplacements.

13. Objet selon une des revendications de 1 à 12, **caractérisé en ce que** la caractéristique de sécurité est réalisée en tant que sous-structure d'une autre caractéristique de sécurité, par exemple d'un hologramme.

14. Objet selon une des revendications de 1 à 12, **caractérisé en ce que** la caractéristique de sécurité est incorporée dans l'objet sous forme d'une ou de plusieurs sections préfabriquées, notamment sous forme de planchettes.

15. Objet selon une des revendications de 1 à 12, **caractérisé en ce que** la caractéristique de sécurité est incorporée à l'objet par sérigraphie ou est collée sur l'objet sous forme d'élément préparé.
